# EUROPEAN PATENT APPLICATION

(11) **EP 3 979 037 A1**
(43) Date of publication of application: **06.04.2022**
(21) Application number: 20832585.2
(22) Date of filing: 08.06.2020
(51) Int. Cl.: G06F 1/16, G06F 3/16, G06F 21/32

(54) **WORKING MODE SWITCHING METHOD AND APPARATUS, STORAGE MEDIUM AND ELECTRONIC DEVICE**

(30) Priority: 24.06.2019 CN 201910550357
(71) Applicant: GUANGDONG OPPO MOBILE TELECOMMUNICATIONS CORP., LTD., Dongguan, Guangdong 523860 (CN)
(72) Inventor: CUI, Zhijia, Dongguan, Guangdong 523860 (CN); YANG, Le, Dongguan, Guangdong 523860 (CN); WU, Anping, Dongguan, Guangdong 523860 (CN); ZHENG, Chao, Dongguan, Guangdong 523860 (CN); ZHANG, Wenzhen, Dongguan, Guangdong 523860 (CN)
(74) Representative: Taor, Simon Edward William
(86) International application number: PCT/CN2020/094950
(87) International publication number: WO 2020/259267

(57) **Abstract**

A working mode switching method and apparatus, a storage medium, and an electronic device. The electronic device comprises a display screen, a first acoustic-electric conversion module, and a second acoustic-electric conversion module. The first acoustic-electric conversion module and the second acoustic-electric conversion module are located on one side of the display screen and connected to the display screen; and the first acoustic-electric conversion module and the second acoustic-electric conversion module are used for realizing the conversion between ultrasonic or acoustic signals and electrical signals.

## Description

This application claims the priority of a Chinese patent application which is submitted to the Chinese Patent Office on June 24, 2019, the present disclosure number is 201910550357.X, and the invention title is "WORKING MODE SWITCHING METHOD AND APPARATUS, STORAGE MEDIUM AND ELECTRONIC DEVICE," the entire disclosure of which is incorporated in the present application by reference.

### BACKGROUND OF DISCLOSURE

### Field of the Disclosure

This application relates to the field of electronic technology, and more specifically, to a working mode switching method, apparatus, storage medium, and electronic device.

### Description of the Related Art

With the development of electronic technology, electronic devices such as smartphones are used more and more frequently in users' lives. For example, users can implement call functions, shopping functions, payment functions, and the like by electronic devices.

Generally, the electronic device is provided with a fingerprint identification module, a sound signal output module, and a sound signal acquisition module. The fingerprint identification module is mostly set in a non-display region on a display screen of the electronic device; the sound signal output module is mostly set at a top side of the electronic device, and the sound signal acquisition module is mostly set at a bottom side of the electronic device.

### SUMMARY

Embodiments of the present disclosure provide a working mode switching method, apparatus, storage medium, and electronic device, which can increase a screen-to-body ratio of the electronic device.

In a first aspect, an embodiment of the present disclosure provides an electronic device, including:
a display screen;
a first acousto-electric conversion module, wherein the first acousto-electric conversion module is located on one side of the display screen and connected to the display screen, and wherein the first acousto-electric conversion module is configured to implement conversion between ultrasonic or acoustic signals and electrical signals; and
a second acousto-electric conversion module, wherein the second acousto-electric conversion module is located on one side of the display screen and connected to the display screen, and wherein the second acousto-electric conversion module is also configured to implement conversion between ultrasonic or acoustic signals and electrical signals.

In a second aspect, an embodiment of the present disclosure provides an electronic device, including:
a display screen;
a first acousto-electric conversion module, wherein the first acousto-electric conversion module is located inside the display screen, and the first acousto-electric conversion module is configured to implement conversion between ultrasonic or acoustic signals and electrical signals; and
a second acousto-electric conversion module, wherein the second acousto-electric conversion module is located inside the display screen, and the second acousto-electric conversion module is also configured to implement conversion between ultrasonic or acoustic signals and electrical signals.

In a third aspect, an embodiment of the present disclosure provides a working mode switching method, that is applied to an electronic device including a display screen, a first acousto-electric conversion module, and a second acousto-electric conversion module, wherein the first acousto-electric conversion module and the second acousto-electric conversion module are located on one side of the display screen and connected to the display screen, or the first acousto-electric conversion module and the second acousto-electric conversion module are located inside the display screen; wherein the first acousto-electric conversion module is used to implement conversion between ultrasonic or acoustic signals and electrical signals, and the second acousto-electric conversion module is also used to implement conversion between ultrasonic or acoustic signals and electrical signals;
wherein the working mode switching method includes:
determining a category of a trigger instruction when the electronic device receives the trigger instruction;
according to the category of the trigger instruction, controlling the first acousto-electric conversion module and the second acousto-electric conversion module in the electronic device to switch to a corresponding working mode.

In a fourth aspect, an embodiment of the present disclosure provides a working mode switching apparatus, that is applied to an electronic device including a display screen, a first acousto-electric conversion module, and a second acousto-electric conversion module, wherein the first acousto-electric conversion module and the second acousto-electric conversion module are located on one side of the display screen and connected to the display screen, or the first acousto-electric conversion module and the second acousto-electric conversion module are located inside the display screen; wherein the first acousto-electric conversion module is used to implement conversion between ultrasonic or acoustic signals and electrical signals, and the second acousto-electric conversion module is also used to implement conversion between ultrasonic or acoustic signals and electrical signals;
wherein the working mode switching apparatus includes:
a determination module used to determine a category of a trigger instruction when the electronic device receives the trigger instruction;
a switching module used to control the first acousto-electric conversion module and the second acousto-electric conversion module in the electronic device to switch to a corresponding working mode according to the category of the trigger instruction.

In a fifth aspect, an embodiment of the present disclosure provides a storage medium:
wherein a computer program is stored in the storage medium, and when the computer program runs on a computer, the computer is configured to cause executions of:
determining a category of a trigger instruction when an electronic device receives the trigger instruction;
according to the category of the trigger instruction, controlling a first acousto-electric conversion module and a second acousto-electric conversion module in the electronic device to switch to a corresponding working mode.

In a sixth aspect, an embodiment of the present disclosure provides an electronic device:

The electronic device includes a processor and a memory, wherein a computer program is stored in the memory, and the processor is configured, by calling the computer program stored in the memory, for:
determining a category of a trigger instruction when the electronic device receives the trigger instruction;
according to the category of the trigger instruction, controlling the first acousto-electric conversion module and the second acousto-electric conversion module in the electronic device to switch to a corresponding working mode.

### BRIEF DESCRIPTION OF DRAWINGS

To more clearly illustrate the technical solutions in the embodiments of the present disclosure, drawings that need to be used in the description of the embodiments will be briefly introduced as follows. Obviously, the drawings in the following description are only some embodiments of the present disclosure. For those skilled in the art, other drawings can be obtained based on these drawings without creative work.
FIG. 1 is a first schematic structural diagram of an electronic device provided by an embodiment of the present disclosure.
FIG. 2 is a first schematic structural diagram of a first acousto-electric conversion module in the electronic device shown in FIG. 1.
FIG. 3 is a second schematic structural diagram of the first acousto-electric conversion module in the electronic device shown in FIG. 1.
FIG. 4 is a first schematic structural side view of the electronic device shown in FIG. 1.
FIG. 5 is a second schematic structural side view of the electronic device shown in FIG. 1.
FIG. 6 is a third schematic structural side view of the electronic device shown in FIG. 1.
FIG. 7 is a schematic diagram of an application scenario of fingerprint identification performed by an electronic device provided by an embodiment of the present disclosure.
FIG. 8 is a schematic diagram of a principle of ultrasonic fingerprint identification performed by an electronic device provided by an embodiment of the present disclosure.
FIG. 9 is a first schematic flowchart of a working mode switching method provided by an embodiment of the present disclosure.
FIG. 10 is a second schematic flowchart of the working mode switching method provided by an embodiment of the present disclosure.
FIG. 11 is a third schematic flowchart of the working mode switching method provided by an embodiment of the present disclosure.
FIG. 12 is a fourth schematic flowchart of the working mode switching method provided by an embodiment of the present disclosure.
FIG. 13 is a schematic positional diagram of the first acousto-electric conversion module and the second acousto-electric conversion module shown in FIG. 12.
FIG. 14 is another schematic positional diagram of the first acousto-electric conversion module and the second acousto-electric conversion module shown in FIG. 12.
FIG. 15 is a schematic structural diagram of a working mode switching apparatus provided by an embodiment of the present disclosure.
FIG. 16 is a second schematic structural diagram of an electronic device provided by an embodiment of the present disclosure.
FIG. 17 is a third schematic structural diagram of an electronic device provided by an embodiment of the present disclosure.

### DETAILED DESCRIPTION OF EMBODIMENTS

The technical solutions in the embodiments of the present disclosure will be clearly and completely described below in conjunction with drawings in the embodiments of the present disclosure. Obviously, the described embodiments are only a part of embodiments of the present disclosure, rather than all of the embodiments. Based on the embodiments in the present disclosure, all other embodiments obtained by those skilled in the art without creative work shall fall within the protection scope of the present disclosure.

An embodiment of the present disclosure provides an electronic device. The electronic device can be a smartphone, a tablet computer, and the like, and can also be a game device, an AR (augmented reality) device, a car device, a data storage device, an audio playback device, a video playback device, a notebook computer, a desktop computing device, and the like.

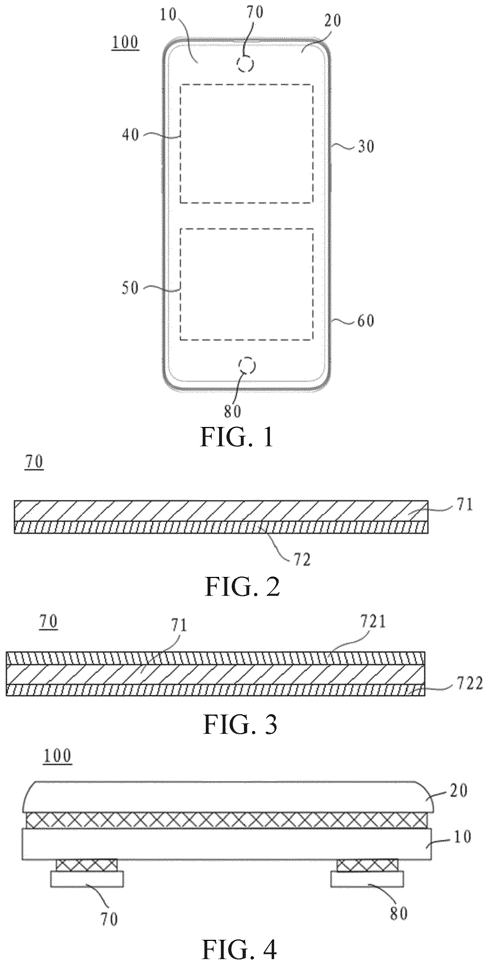

Referring to FIG. 1, which is a first schematic structural diagram of an electronic device provided by an embodiment of the present disclosure. The electronic device 100 includes a display screen 10, a cover plate 20, a middle frame 30, a circuit board 40, a battery 50, a back cover 60, a first acousto-electric conversion module 70, and a second acousto-electric conversion module 80.

The display screen 10 can be used to display information such as images and text. In some embodiments, the display screen 10 may be a liquid crystal display (LCD) or an organic light-emitting diode (OLED) display.

The display screen 10 may be installed on the middle frame 30 and connected to the back cover 60 through the middle frame 30 to form a display surface of the electronic device 100. The display screen 10 serves as a front shell of the electronic device 100, and forms a housing of the electronic device 100 together with the back cover 60, and is used for accommodating other electronic devices or functional components of the electronic device 100. For example, the housing may be used to accommodate electronic devices or functional components such as a processor, a memory, one or more sensors, and a camera module 71 of the electronic device 100.

In some embodiments, the display screen 10 may include a display region and a non-display region. The display region performs a display function of the display screen 10 and is used to display information such as images and text. The non-display region does not display information. The non-display region can be used to set up functional components such as the camera module 71 and touch electrodes of the display screen.

In some embodiments, the display screen 10 may be a full screen. At this time, the display screen 10 can display information in a full-screen manner, so that the electronic device 100 has a larger screen-to-body ratio. The display screen 10 only includes a display region and does not include a non-display region, or an area of the non-display region is relatively small for the user. At this time, functional components such as the camera module 71 and the proximity sensor in the electronic device 100 can be hidden under the display screen 10, and a fingerprint identification module of the electronic device 100 can be disposed on the back cover 60 of the electronic device 100.

In some embodiments, the cover plate 20 may be installed on the middle frame 30, and the cover plate 20 covers the display screen 10 to protect the display screen 10 from being scratched or damaged by water. The cover plate 20 may be a transparent glass cover plate, so that the user can observe contents displayed on the display screen 10 through the cover plate 20. In some embodiments, the cover plate 20 may be a glass cover plate made of sapphire.

The middle frame 30 may have a thin-plate-like or sheet-like structure or have a hollow frame structure. The middle frame 30 is used to provide support for the electronic devices or functional components in the electronic device 100 to install the electronic devices and functional components in the electronic device 100 together. For example, functional components, such as the camera module 71, the receiver component, the circuit board 40, and the battery 50 in the electronic device 100, can be installed on the middle frame 30 for fixing. In some embodiments, a material of the middle frame 30 may include metal or plastic.

The circuit board 40 may be installed on the middle frame 30. The circuit board 40 may be a main board of the electronic device 100. The circuit board 40 is provided with a grounding point to implement grounding for the circuit board 40. The circuit board 40 can be integrated with one or two or more of functional components such as a microphone, a speaker, a receiver, a headphone interface, a universal serial bus interface (USB interface), a camera assembly 70, a distance sensor, an ambient light sensor, a gyroscope, and a processor. Meanwhile, the display screen 10 may be electrically connected to the circuit board 40.

In some embodiments, the circuit board 40 is provided with a display control circuit. The display control circuit outputs electrical signals to the display screen 10 to control the display screen 10 to display information.

The battery 50 may be installed on the middle frame 30. Meanwhile, the battery 50 is electrically connected to the circuit board 40 to implement that the battery 50 supplies power to the electronic device 100. The circuit board 40 may be provided with a power management circuit. The power management circuit is used to distribute a voltage provided by the battery 50 to various electronic components in the electronic device 100.

In some embodiments, the battery 50 may be a rechargeable battery. For example, the battery 50 may be a lithium-ion battery.

The back cover 60 is used to form an outer contour of the electronic device 100. The back cover 60 may be one-piece molding. During a molding process of the back cover 60, a hole for a rear camera module, a mounting hole for a fingerprint identification module, and other structures may be formed on the back cover 60.

In some embodiments, the back cover 60 may be a metal shell, such as magnesium alloy, stainless steel, and other metals. It should be noted that a material of the back cover 60 of the embodiment of the present disclosure is not limited thereto, and other forms may also be used. For example, the back cover 60 may be a plastic shell. For another example, the back cover 60 may be a ceramic shell. For another example, the back cover 60 may include a plastic part and a metal part, and the back cover 60 may be a shell structure in which metal and plastic materials cooperate with each other. Specifically, the metal part may be first formed, for example, a magnesium alloy substrate is formed by injection molding, and plastic is then injected on the magnesium alloy substrate to form a plastic substrate to form a complete shell structure.

The first acousto-electric conversion module 70 and the second acousto-electric conversion module 80 may be disposed on one side of the display screen 10. The first acousto-electric conversion module 70 and the second acousto-electric conversion module 80 are located inside of the electronic device 100.

The first acousto-electric conversion module 70 and the second acousto-electric conversion module 80 are used to implement conversion between ultrasonic or acoustic signals and electrical signals. The first acousto-electric conversion module 70 and the second acousto-electric conversion module 80 can transmit ultrasonic signals, and the ultrasonic signals penetrate the display screen 10 so as to contact the user's finger. Different parts of a fingerprint pattern on the user's finger reflect to generate different reflection signals. The first acousto-electric conversion module 70 and the second acousto-electric conversion module 80 receive the reflection signals and obtain a fingerprint image of the user's finger according to the reflection signals, so that fingerprint identification can be performed. The first acousto-electric conversion module 70 and the second acousto-electric conversion module 80 can also convert electrical signals into acoustic signals that can be heard by human ears. The acoustic signals vibrate the display screen 10 of the electronic device 100. The acoustic signals are transmitted to the outside of the electronic device 100 by vibrating the display screen 10 so that the electrical signals and the acoustic signals can be converted to implement the function of the earpiece. The first acousto-electric conversion module 70 and the second acousto-electric conversion module 80 can also receive the vibration of an external acoustic signal through the display screen 10. In addition, the acoustic signals are converted into electrical signals through the vibration of the display screen 10, thereby realizing the conversion between the acoustic signals and the electrical signals to realize a microphone function.

Referring to FIG. 2, which is a first schematic structural diagram of the first acousto-electric conversion module in the electronic device shown in FIG. 1.

In some embodiments, the first acousto-electric conversion module 70 may include a first piezoelectric material layer 71 and a first electrode layer 72 that are disposed in a stacked manner. When a driving signal is applied to the first piezoelectric material layer 71, the first piezoelectric material layer 71 can generate ultrasonic signals and transmit the ultrasonic signals to the outside. When the driving signal is applied to the first piezoelectric material layer 71, the first piezoelectric material layer 71 can also generate the acoustic signals audible to human ears and transmit the acoustic signals to the outside. The driving signal applied to the first piezoelectric material layer 71 may be, for example, a driving voltage. It is understandable that the driving signal is high-frequency alternating current signals, intermediate-frequency alternating current signals, low-frequency alternating current signals, and the like. The material of the first piezoelectric material layer 71 may include, for example, piezoelectric ceramics. Namely, the first piezoelectric material layer 71 may be a layered structure formed by piezoelectric ceramics.

The first piezoelectric material layer 71 can also receive ultrasonic or acoustic signals to cause the movement of its electric charges and form a loop of electric charges with the first electrode layer 72 to convert the ultrasonic or acoustic signals into the electrical signals.

It is understandable that the electronic device 100 can control the first electrode layer 72 to drive high-frequency alternating current signals to the first piezoelectric material layer 71, and the first piezoelectric material layer 71 is driven by high-frequency alternating current signals to outwardly transmit high-frequency ultrasonicsignals for ultrasonic fingerprint identification. The high-frequency ultrasonic signals may be acoustic signals with a frequency higher than 20000 Hz.

The electronic device 100 can also control the first electrode layer 72 to drive intermediate-frequency or low-frequency alternating current signals to the first piezoelectric material layer 71. The first piezoelectric material layer 71 is driven by the high-frequency alternating current signals to transmit audible intermediate-frequency or low-frequency acoustic signals to human ears to convert the electrical signals into the acoustic signals to implement the function of an earpiece. The intermediate-frequency or low-frequency acoustic signals may be acoustic signals in the range of 20 Hz to 20000 Hz. Preferably, the intermediate-frequency or low-frequency acoustic signals may be acoustic signals in the range of 1000 Hz to 3000 Hz. The human ear is more sensitive to the acoustic signals in this frequency band.

Continue to refer to FIG. 2, wherein the first electrode layer 72 is connected to the first piezoelectric material layer 71. For example, the first electrode layer 72 and the first piezoelectric material layer 71 can be disposed in a stacked manner, and a connection is implemented.

The first electrode layer 72 is used to apply a driving signal to the piezoelectric material layer 71 to drive the first piezoelectric material layer 71 to transmit ultrasonic signals and audible acoustic signals, wherein the driving signal may be high-frequency alternating current signals, intermediate-frequency alternating current signals, low-frequency alternating current signals, and the like, such as high-frequency pulse signals, intermediate-frequency pulse signals, low-frequency pulse signals, and the like.

It is understandable that the first electrode layer 72 may include two first electrode layers spaced apart from each other, for example, a positive first electrode layer and a negative first electrode layer.

Referring to FIG. 3, which is a schematic diagram of a second structure of the first acousto-electric conversion module in the electronic device shown in FIG. 1.

The first electrode layer 72 includes a first sub-electrode layer 721 and a second sub-electrode layer 722 spaced apart from each other. The first sub-electrode layer 721 is disposed on one side of the first piezoelectric material layer 71 and connected to the first piezoelectric material layer 71. The second sub-electrode layer 722 is disposed on the other side of the first piezoelectric material layer 71 and connected to the first piezoelectric material layer 71.

The first sub-electrode layer 721 and the second sub-electrode layer 722 constitute two electrodes of the first piezoelectric material layer 71. For example, the first sub-electrode layer 721 may be the positive first electrode layer of the first piezoelectric material layer 71, and the second sub-electrode layer 722 may be the negative first electrode layer of the first piezoelectric material layer 71. It is understandable that the functions of the first sub-electrode layer 721 and the second sub-electrode layer 722 can also be interchanged. Namely, the first sub-electrode layer 721 is the negative first electrode layer of the first piezoelectric material layer 71, and the second sub-electrode layer 722 is the positive first electrode layer of the first piezoelectric material layer 71.

The first sub-electrode layer 721 and the second sub-electrode layer 722 are used to jointly apply a driving signal to the first piezoelectric material layer 71. For example, the first sub-electrode layer 721 and the second sub-electrode layer 722 may have different electric potentials to form an electric potential difference on the first piezoelectric material layer 71, so that the driving signal can be applied to the first piezoelectric material layer 71.

It should be noted that when the first piezoelectric material layer 71 is driven by the driving signal to transmit ultrasonic signals, the frequency of the transmitted ultrasonic signals is the same as the frequency of the driving signal. Namely, what is the frequency of the driving signal applied to the first piezoelectric material layer 71, and what is the frequency of the ultrasonic signals transmitted by the first piezoelectric material layer 71. When the first piezoelectric material layer 71 is driven by the driving signal to transmit acoustic signals audible to human ears, the frequency of the transmitted acoustic signals are the same as the frequency of the driving signal. Namely, what is the frequency of the driving signal applied to the first piezoelectric material layer 71, and what is the frequency of the acoustic signals transmitted by the first piezoelectric material layer 71.

The first sub-electrode layer 721 may be set as an equipotential layer. Namely, electric potentials at any positions of the first sub-electrode layer 721 are equal. The second sub-electrode layer 722 may also be set as an equipotential layer. Namely, electric potentials at any positions of the second sub-electrode layer 722 are equal.

It is understandable that the second acousto-electric conversion module 80 may also include a second piezoelectric material layer and a second electrode layer that are disposed in a stacked manner.

When a driving signal is applied to the second piezoelectric material layer, the second piezoelectric material layer can generate ultrasonic signals and transmit the ultrasonic signals to the outside. when a driving signal is applied to the second piezoelectric material layer, the second piezoelectric material layer can also generate acoustic signals audible to human ears and transmit the acoustic signals to the outside. The driving signal applied to the second piezoelectric material layer may be, for example, a driving voltage. It is understandable that the driving signal is high-frequency alternating current signals, intermediate-frequency alternating current signals, low-frequency alternating current signals, and the like. The material of the second piezoelectric material layer may include, for example, piezoelectric ceramics. Namely, the second piezoelectric material layer may be a layered structure formed by piezoelectric ceramics.

The second piezoelectric material layer can also receive ultrasonic or acoustic signals to cause the movement of its electric charges and form a loop of electric charges with the second electrode layer to convert the ultrasonic or acoustic signals into the electrical signals.

It is understandable that the electronic device 100 can control the second electrode layer to drive high-frequency alternating current signals to the second piezoelectric material layer. The second piezoelectric material layer is driven by the high-frequency alternating current signals to transmit high-frequency ultrasonicsignals to the outside for ultrasonic fingerprint identification. The high-frequency ultrasonic signals may be acoustic signals with a frequency higher than 20000 Hz.

The electronic device 100 can also control the second electrode layer to drive intermediate-frequency or low-frequency alternating current signals to the second piezoelectric material layer. The second piezoelectric material layer is driven by the high-frequency alternating current signals to outwardly transmit the intermediate-frequency or low-frequency acoustic signals audible to human ears to convert the electrical signals into the acoustic signals to implement a function of an earpiece. The intermediate-frequency or low-frequency acoustic signals may be acoustic signals in the range of 20 Hz to 20000 Hz. Preferably, the intermediate-frequency or low-frequency acoustic signals may be acoustic signals in the range of 1000 Hz to 3000 Hz. The human ear is more sensitive to the acoustic signals in this frequency band.

The second electrode layer is connected to the second piezoelectric material layer. For example, the second electrode layer and the second piezoelectric material layer may be disposed in a stacked manner and a connection is implemented.

The second electrode layer is used to apply a driving signal to the second piezoelectric material layer to drive the second piezoelectric material layer to transmit ultrasonic signals and audible acoustic signals, wherein the driving signal can be high-frequency alternating current signals, intermediate-frequency alternating current signals, low-frequency alternating current signals, and the like, such as high-frequency pulse signals, intermediate-frequency pulse signals, low-frequency pulse signals, and the like.

It is understandable that the second electrode layer may include two second electrode layers spaced apart from each other, for example, a positive second electrode layer and a negative second electrode layer.

In some embodiments, the second electrode layer includes a third sub-electrode layer and a fourth sub-electrode layer spaced apart from each other. The third sub-electrode layer is disposed on one side of the second piezoelectric material layer and connected to the second piezoelectric material layer. The fourth sub-electrode layer is disposed on the other side of the second piezoelectric material layer and connected to the second piezoelectric material layer.

The third sub-electrode layer and the fourth sub-electrode layer constitute two electrodes of the second piezoelectric material layer. For example, the third sub-electrode layer may be a positive second electrode layer of the second piezoelectric material layer, and the fourth sub-electrode layer may be a negative second electrode layer of the second piezoelectric material layer. It is understandable that the functions of the third sub-electrode layer and the fourth sub-electrode layer can also be interchanged. Namely, the third sub-electrode layer is a negative third electrode layer of the second piezoelectric material layer, and the fourth sub-electrode layer is a positive first electrode layer of the second piezoelectric material layer.

The third sub-electrode layer and the fourth sub-electrode layer are used to jointly apply a driving signal to the second piezoelectric material layer. For example, the third sub-electrode layer and the fourth sub-electrode layer may have different electric potentials to form an electric potential difference on the second piezoelectric material layer, so that the driving signal can be applied to the second piezoelectric material layer.

It should be noted that when the second piezoelectric material layer is driven by the driving signal to transmit ultrasonic signals, the frequency of the transmitted ultrasonic signals is the same as the frequency of the driving signal. Namely, what is the frequency of the driving signal applied to the second piezoelectric material layer, and what is the frequency of the ultrasonic signals transmitted by the second piezoelectric material layer. When the second piezoelectric material layer is driven by the driving signal to transmit acoustic signals audible to human ears, the frequency of the transmitted acoustic signals are the same as the frequency of the driving signal. Namely, what is the frequency of the driving signal applied to the second piezoelectric material layer, and what is the frequency of the acoustic signals transmitted by the second piezoelectric material layer.

The third sub-electrode layer may be set as an equipotential layer. Namely, electric potentials at any positions of the third sub-electrode layer are equal. It is also possible to set the fourth sub-electrode layer as an equipotential layer. Namely, electric potentials at any positions of the fourth sub-electrode layer are equal.

Referring to FIG. 4, which is a schematic structural diagram of a first side view of the electronic device shown in FIG. 1.

In some embodiments, the first acousto-electric conversion module 70 may be disposed on one side of the display screen 10 away from a display surface. Namely, the first acousto-electric conversion module 70 may be disposed on an inner side of the display screen 10. The first acousto-electric conversion module 70 may be pasted on a surface on the inner side of the display screen 10 by optically transparent glue or other adhesives.

The second acousto-electric conversion module 80 may also be disposed on one side of the display screen 10 away from the display surface. Namely, the second acousto-electric conversion module 80 is disposed on the inner side of the display screen 10. The second acousto-electric conversion module 80 can be pasted on the surface on the inner side of the display screen 10 by optically transparent glue or other adhesives. The inner side of the display screen 10 refers to an invisible side of the display screen 10 when the electronic device 100 is observed from the outside. Namely, the first acousto-electric conversion module 70 and the second acousto-electric conversion module 80 are located inside the electronic device 100.

In some embodiments, the first acousto-electric conversion module 70 may be located at a bottom of the display screen 10 to correspond to a user's mouth. The second acousto-electric conversion module 80 may be located at a top of the display screen 10 to correspond to a user's ear.

In some embodiments, the first acousto-electric conversion module 70 may also be located at the top of the display screen 10 to correspond to the user's ear. The second acousto-electric conversion module 80 may be located at the bottom of the display screen to correspond to the user's mouth.

The bottom of the display screen 10 includes a left side of the bottom, a right side of the bottom, and a central part of the bottom. The top of the display screen 10 includes a left side of the top, a right side of the top, and a central part of the top. The first acousto-electric conversion module 70 may be located at any position mentioned above. The second acousto-electric conversion module 80 may be located at any position mentioned above. By viewing from the outside of the electronic device 100, the first acousto-electric conversion module 70 is projected on a surface of the electronic device 100 (for example, a surface of the display screen) to form a first fingerprint identification region. The second acousto-electric conversion module 80 is projected on a surface of the electronic device 100 (for example, a surface of the display screen) to form a second fingerprint identification region. The first fingerprint identification region and the second fingerprint identification region may be relatively located on the top and the bottom of the electronic device 100.

The first acousto-electric conversion module 70 and the second acousto-electric conversion module 80 are disposed on one side of the display screen 10 away from the display surface. No electronic device is disposed between the display screen 10 and the cover plate 20. The structure of the display screen 10 and the cover plate 20 is more stable. In addition, the first acousto-electric conversion module 70 and the second acousto-electric conversion module 80 can realize ultrasonic fingerprint identification and conversion of electrical signals and acoustic signals. Such that the degree of integration is high, an internal layout of the electronic device 100 is more reasonable, and there is no need to make holes on the display screen 10, which greatly increases the screen-to-body ratio of the display screen 10.

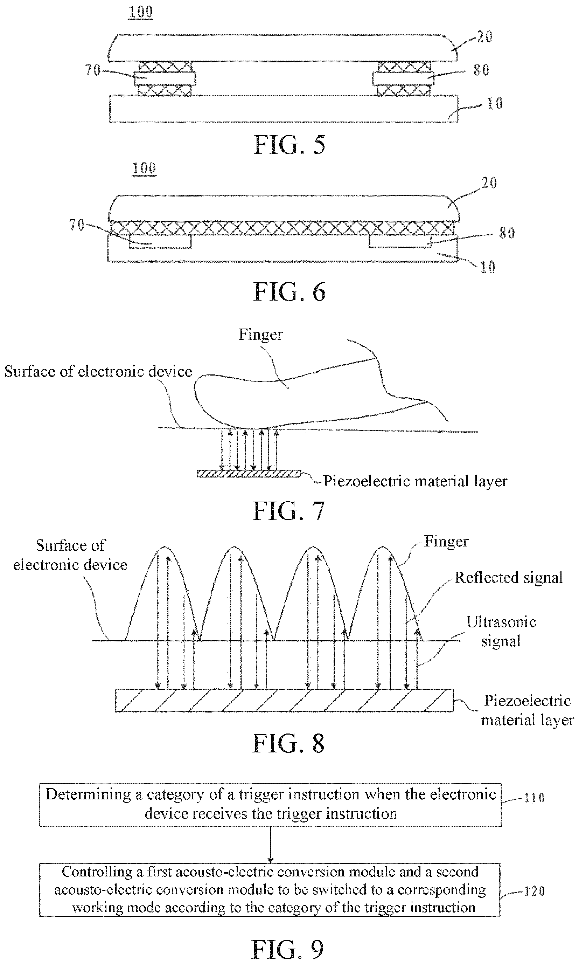

Referring to FIG. 5, which is a schematic structural diagram of a second side view of the electronic device shown in FIG. 1.

In some embodiments, the cover plate 20 is located on one side of the display screen 10 having the display surface. The first acousto-electric conversion module 70 is fixed between the display screen 10 and the cover plate 20. One face of the first acousto-electric conversion module 70 can be pasted on the cover plate 20 by optically transparent glue or other adhesives, and the other face can also be pasted on the display screen 10 by the optically transparent glue or adhesives.

The second acousto-electric conversion module 80 is fixed between the display screen 10 and the cover plate 20. One face of the second acousto-electric conversion module 80 can be pasted on the cover plate 20 by optically transparent glue or adhesive, and the other face can also be pasted on the display screen 10 by the optically transparent glue or adhesive.

The first acousto-electric conversion module 70 and the second acousto-electric conversion module 80 are disposed between the cover plate 20 and the display screen 10. The distance that the ultrasonic signals transmitted by the first acousto-electric conversion module 70 and the second acousto-electric conversion module 80 need to penetrate becomes smaller, which can increase the intensity of the reflected signals, thereby improving the accuracy of ultrasonic fingerprint identification. The first acousto-electric conversion module 70 and the second acousto-electric conversion module 80 are disposed between the cover plate 20 and the display screen 10. The acoustic signals generated by the first acousto-electric conversion module 70 and the second acousto-electric conversion module 80 can directly vibrate the cover plate 20 and the display screen 10. The external acoustic signals can also directly vibrate the cover plate 20 and the display screen 10. The acoustic signals transmitted to the first acousto-electric conversion module 70 and the second acousto-electric conversion module 80 by the vibration of the cover plate 20 and the display screen 10 can reduce the loss of the acoustic signals in the transmission process to improve the transmission efficiency of the acoustic signals and improve the conversion efficiency between electrical and acoustic signals.

Referring to FIG. 6, which is a schematic structural diagram of a third side view of the electronic device shown in FIG. 1.

In some embodiments, the first acousto-electric conversion module 70 is located inside the display screen 10, and the second acousto-electric conversion module 80 may also be located inside the display screen 10.

In some embodiments, the display screen 10 may include a first substrate layer, a display layer, and a second substrate layer that are sequentially connected. The first substrate layer is located on one side of the display layer, and the second substrate layer is located on the other side of the display layer. The display layer can be used to display information. The information may include picture information, text information, audio/video information, and the like.

The first acousto-electric conversion module 70 may be located between the display layer and the first substrate layer or located between the display layer and the second substrate layer. The second acousto-electric conversion module 80 may be located between the display layer and the first substrate layer or located between the display layer and the second substrate layer.

It is understandable that the first acousto-electric conversion module 70 may be located between the display layer and the first substrate layer, and the second acousto-electric conversion module 80 may also be located between the display layer and the first substrate layer. The first acousto-electric conversion module 70 may be located between the display layer and the second substrate layer, and the second acousto-electric conversion module 80 may also be located between the display layer and the second substrate layer. The first acousto-electric conversion module 70 may also be located between the display layer and the first substrate layer, and the second acousto-electric conversion module 80 may be located between the display layer and the second substrate layer. The first acousto-electric conversion module 70 may also be located between the display layer and the second substrate layer, and the second acousto-electric conversion module 80 may be located between the display layer and the first substrate layer.

It is understandable that specific structures and functions of the first acousto-electric conversion module 70 and the second acousto-electric conversion module 80 in the present embodiment are the same as those of the first acousto-electric conversion module 70 and the second acousto-electric conversion module 70 in the embodiment mentioned above. The specific structures and functions of the first acousto-electric conversion module 70 and the acousto-electric conversion module 80 of the present embodiment will not be repeated here.

The first acousto-electric conversion module 70 and the second acousto-electric conversion module 80 are disposed inside the display screen 10. The distance that the ultrasonic signals transmitted by the first acousto-electric conversion module 70 and the second acousto-electric conversion module 80 need to penetrate is reduced to increase the intensity of the reflected signals, thereby improving the accuracy of ultrasonic fingerprint identification. The first acousto-electric conversion module 70 and the second acousto-electric conversion module 80 are disposed inside the display screen 10. During processes that the acoustic signals generated by the first acousto-electric conversion module 70 and the second acousto-electric conversion module 80 are transmitted to the outside by the vibration of the display screen 10, and the external acoustic signals are transmitted inward by the vibration of the display screen 10, the loss of the acoustic signals in the transmission process can be decreased. Not only the transmission efficiency of the acoustic signals can be improved, but also the conversion efficiency between electrical and acoustic signals can be improved.

In the description of the present application, it should be understood that terms, such as "first" and "second," are only used to distinguish similar objects and cannot be understood as indicating or implying relative importance or implicitly indicating the number of indicated technical features.

Referring to FIGs. 7 and 8, FIG. 7 is a schematic diagram of an application scenario of ultrasonic fingerprint identification performed by an electronic device provided in an embodiment of the present disclosure, and FIG. 8 is a schematic diagram of a principle of ultrasonic fingerprint identification performed by an electronic device provided by an embodiment of the present disclosure.

When a user's finger touches or presses on a fingerprint identification region on a surface of an electronic device 100, the electronic device 100 controls a first acousto-electric conversion module 70 to transmit ultrasonic signals in a direction toward the finger. Reflected signals are generated when the ultrasonic signals touch the finger. The reflected signals are further reflected to reach positions at the first acousto-electric conversion module 70 and received by the first acousto-electric conversion module 70. Subsequently, the first acousto-electric conversion module 70 converts the reflected signals that are received into corresponding electrical signals, and a fingerprint image of the user's finger can be obtained.

It is understandable that the principle of fingerprint identification of the second acousto-electric conversion module 80 of the present disclosure and the principle of fingerprint identification of the first acousto-electric conversion module 70 may be the same. Namely, when the user's finger touches or presses on the fingerprint identification region on the surface of the electronic device 100, the electronic device 100 controls the second acousto-electric conversion module 80 to transmit ultrasonic signals in a direction toward the finger. When ultrasonic signals touch the finger, reflected signals are generated. The reflected signals are further reflected to reach positions at the second acousto-electric conversion module 80 and received by the second acousto-electric conversion module 80. Subsequently, the second acousto-electric conversion module 80 converts the reflected signals that are received into corresponding electrical signals, and the fingerprint image of the user's finger can be obtained.

It is understandable that there is a fingerprint pattern on the surface of the finger, and an uneven region forms the fingerprint pattern. Therefore, when different regions of the fingerprint pattern reflect the ultrasonic signals to form the reflected signals, the intensities of the reflected signals are different. The first acousto-electric conversion module 70 or the second acousto-electric conversion module 80 receives the intensities of the reflected signals from different parts of the finger are also different. Therefore, the first acousto-electric conversion module 70 or the second acousto-electric conversion module 80 can obtain the degree of concavity and convexity of different parts of the finger according to the intensities of the reflected signals of different parts of the finger, and a three-dimensional fingerprint image of the user's finger can be formed.

For example, the deepest concave part in the fingerprint pattern may be called a fingerprint valley, and the highest convex part in the fingerprint pattern may be called a fingerprint ridge. When the user's finger reflects the ultrasonic signals to generate the reflected signals, the intensity of the reflected signals generated by the fingerprint valley is the weakest, and the intensity of the reflected signals generated by the fingerprint ridge is the strongest. The first acousto-electric conversion module 70 or the second acousto-electric conversion module 80 can identify the fingerprint valley and fingerprint ridge on the finger according to that the strengths of the reflected signal being received are generated by different parts of the fingers.

The principle that the electronic device 100 of the present disclosure controls the first acousto-electric conversion module 70 to convert electrical signals into acoustic signals are described as follows:

When the electronic device 100 is detected that it is in a call state or an audio/video playback state, the electronic device 100 controls an electrode layer 72 to apply a driving signal to the piezoelectric material 71, and the first piezoelectric material layer 71 is driven by the driving signal to transmit acoustic signals audible to human ears to the outside of the electronic device 100. the acoustic signals drive the display screen 10 to vibrate, and the display screen 10 is used to transmit acoustic signals audible to human ears, thereby converting the electrical signals into the acoustic signals.

It is understandable that the principle of the second acousto-electric conversion module 80 converting the acoustic signals into the acoustic signals are the same as the principle of the first acousto-electric conversion module 70 converting the acoustic signals into the acoustic signals, and will not be repeated again.

The principle that the electronic device 100 of the present disclosure controls the first acousto-electric conversion module 70 to convert acoustic signals into electrical signals are described as follows:

When the electronic device 100 is detected that it is in a state such as a call state, an audio/video playback state, and the like, the display screen 10 receives the vibration generated by the external acoustic signals and delivers the vibration to the first piezoelectric material layer 71. The first piezoelectric material layer 71 receives the vibration and deforms. The charges on the first electrode layer 72 generate the movement to form current signals, thereby converting the acoustic signals into the electrical signals.

It is understandable that the principle of the second acousto-electric conversion module 80 converting the acoustic signals into the electrical signals are the same as the principle of the first acousto-electric conversion module 70 converting the acoustic signals into the electrical signals, and will not be repeated again.

The embodiment of the present disclosure provides a working mode switching method, which can be applied to the electronic device in the embodiments mentioned above, the electronic device may include a display screen, a first acousto-electric conversion module, and a second acousto-electric conversion module, the first acousto-electric conversion module and the second acousto-electric conversion module are located on one side of the display screen and connected to the display screen, or the first acousto-electric conversion module and the second acousto-electric conversion module are located inside the display screen; the first acousto-electric conversion module is used to implement the conversion between ultrasonic or acoustic signals and electrical signals, and the second acousto-electric conversion module is also used to implement the conversion between ultrasonic or acoustic signals and electrical signals;

The working mode switching method includes:
When the electronic device receives the trigger instruction, determining a category of a trigger instruction;

According to the category of the trigger instruction, controlling the first acousto-electric conversion module and the second acousto-electric conversion module in the electronic device to switch to a corresponding working mode.
In some embodiments, the category of the trigger instruction includes a fingerprint identification instruction, a sound signal output instruction, and a sound signal acquisition instruction;
According to the category of the trigger instruction, controlling the first acousto-electric conversion module and the second acousto-electric conversion module in the electronic device to switch to the corresponding working mode, includes:
   When the category of the trigger instruction includes the fingerprint identification instruction, according to the fingerprint identification instruction, controlling at least one of the first acousto-electric conversion module and the second acousto-electric conversion module to implement conversion between ultrasonic signals and electrical signals to implement fingerprint identification;
   When the category of the trigger instruction includes the sound signal output instruction, according to the sound signal output instruction, controlling at least one of the first acousto-electric conversion module and the second acousto-electric conversion module to convert electrical signals into acoustic signals to implement sound signal output;
   When the category of the trigger instruction includes the sound signal acquisition instruction, according to the sound signal acquisition instruction, controlling at least one of the first acousto-electric conversion module and the second acousto-electric conversion module to convert acoustic signals into electrical signals to implement sound signal acquisition.

In some embodiments, when the category of the trigger instruction includes the fingerprint identification instruction, according to the fingerprint identification instruction, controlling at least one of the first acousto-electric conversion module and the second acousto-electric conversion module to implement the conversion between ultrasound signals and electrical signals to implement fingerprint identification, includes:
When the category of the trigger instruction includes the fingerprint identification instruction, determining a safety factor of fingerprint identification corresponding to the fingerprint identification instruction;
If the safety factor is greater than a safety factor threshold, controlling the first acousto-electric conversion module and the second acousto-electric conversion module to implement the conversion between the ultrasonic signals and the electrical signals according to the trigger instruction;
If the safety factor is not greater than the safety factor threshold, controlling the first acousto-electric conversion module or the second acousto-electric conversion module to implement the conversion between the ultrasonic signals and the electrical signals according to the trigger instruction.

Referring to FIG. 9, which is a first schematic flowchart of a working mode switching method provided by an embodiment of the present disclosure. The working mode switching method includes the following steps:
110: determining a category of a trigger instruction when the electronic device receives the trigger instruction.

Determining the category of the trigger instruction is needed when the electronic device 100 receives the trigger instruction. The trigger instruction may be generated when the user tries to unlock the electronic device 100, or generated when the user tries to run an encrypted application or open an encrypted file, or generated during processes that the user is answering or making a phone call, making an audio/video call, or playing audio/video.

For example, when the user's finger touches or presses the display screen 10 of the electronic device 100, or when the electronic device 100 is lit on the display screen 10 in a locked state, or when the user runs an encrypted application on the electronic device 100, or when the electronic device 100 detects that the user answers a phone call or an audio/video call, or when the user runs a dialing application or an audio/video call application on the electronic device 100, a processor of the electronic device 100 receives related trigger instructions. Subsequently, the electronic device 100 determines the category of the trigger instruction.

120: according to the category of the trigger instruction, controlling the first acousto-electric conversion module and the second acousto-electric conversion module in the electronic device to switch to a corresponding working mode.

It is understandable that the first acousto-electric conversion module 70 and the second acousto-electric conversion module 80 can implement conversion between ultrasonic signals and electrical signals. Namely, the piezoelectric material layers of the first acousto-electric conversion module 70 and the second acousto-electric conversion module 80 can be driven by the electrode layer to transmit ultrasonic signals to the outside of the display screen 10, and receive the ultrasonic signals reflected by an obstacle to convert reflected signals into electrical signals.

The first acousto-electric conversion module 70 and the second acousto-electric conversion module 80 can also convert acoustic signals into electrical signals. Namely, the piezoelectric material layers of the first acousto-electric conversion module 70 and the second acousto-electric conversion module 80 can receive the external acoustic signals transmitted by the vibration of the display screen 10 and convert the acoustic signals into the electrical signals.

The first acousto-electric conversion module 70 and the second acousto-electric conversion module 80 can also convert electrical signals into acoustic signals. Namely, the piezoelectric material layers of the first acousto-electric conversion module 70 and the second acousto-electric conversion module 80 are driven by the electrode layer to convert electrical signals into acoustic signals and vibrate the display screen 10 to transmit the acoustic signals to the outside.

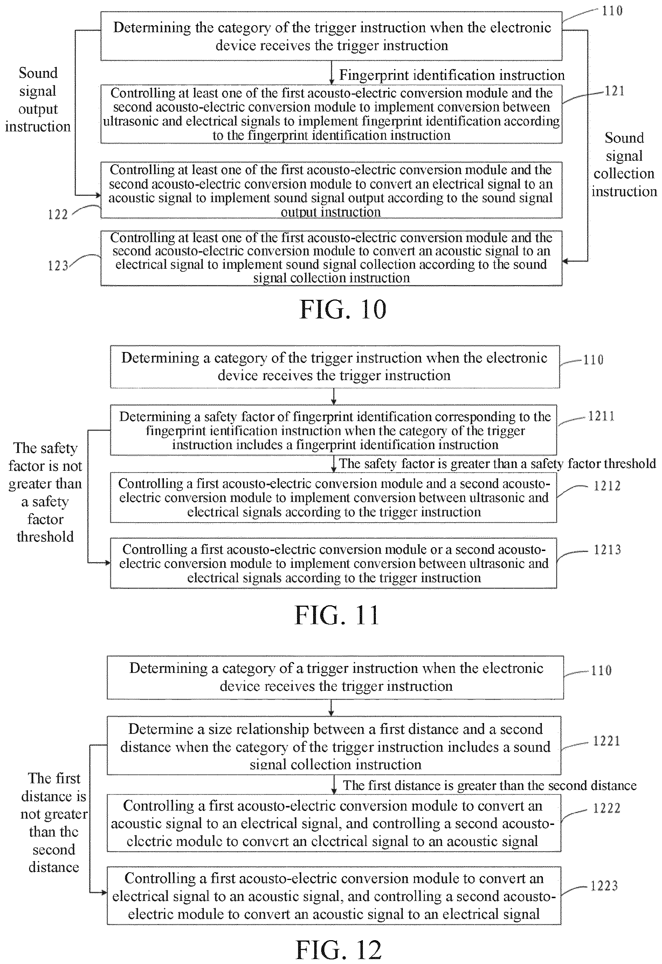

Referring to FIG. 10, which is a second schematic flowchart of the working mode switching method provided by an embodiment of the present disclosure. The category of trigger instructions includes a fingerprint identification instruction, a sound signal output instruction, and a sound signal acquisition instruction.

Step 120: according to the category of the trigger instruction, the step of controlling the first acousto-electric conversion module and the second acousto-electric conversion module in the electronic device to switch to the corresponding working mode includes the following sub-steps:
121: when the category of the trigger instruction includes the fingerprint identification instruction, according to the fingerprint identification instruction, controlling at least one of the first acousto-electric conversion module and the second acousto-electric conversion module to implement conversion between ultrasonic signals and electrical signals to implement fingerprint identification.

The category of the trigger instruction may include the fingerprint identification instruction, the fingerprint identification instruction may be a trigger instruction received by the electronic device 100 that requires to perform an ultrasonic fingerprint identification function, or the fingerprint identification instruction may be generated when the user attempts to unlock the electronic device 100, or generated when the user tries to run an encrypted application or open an encrypted file.

For example, when the user's finger touches or presses the display screen 10 of the electronic device 100, or when the electronic device 100 is lit up the display screen 10 in a locked state, or when the user runs an encrypted application on the electronic device 100, a processor of the electronic device 100 generates a trigger instruction. Subsequently, the electronic device 100 receives the trigger instruction and controls at least one of the first acousto-electric conversion module 70 and the second acousto-electric conversion module 80 to perform fingerprint identification according to the trigger instruction.

In some embodiments, the first acousto-electric conversion module 70 converting ultrasonic signals into electrical signals for fingerprint identification may include the following steps:
First, transmitting, by the first acousto-electric conversion module 70, ultrasonic signals according to the trigger instruction.
Second, receiving, by the first acousto-electric conversion module 70, reflected signals generated by the ultrasonic signals reflected by an obstacle and acquiring a fingerprint image according to the reflected signals;
After the first acousto-electric conversion module 70 transmits ultrasonic signals, when the ultrasonic signals touch an obstacle, the ultrasonic signals are reflected by the obstacle and generate reflected signals. When the electronic device 100 identifies the user's fingerprint, the obstacle is the user's finger, and the reflected signals are reflected signals generated by the finger.

Subsequently, the acousto-electric conversion module 70 in the electronic device 100 receives the reflected signals, and converts the reflected signals into corresponding electrical signals. The electronic device 100 can obtain the fingerprint image of the user's finger based on the electrical signals, that is, based on the reflected signals. The fingerprint image acquired at this time is a fingerprint image of the user's finger. It is understandable that the fingerprint image is a fingerprint image of the user's finger.

It should be noted that the fingerprint image obtained by the electronic device 100 is a three-dimensional image, which is different from the two-dimensional fingerprint image obtained in a manner of photographing by optical means such as a camera. The three-dimensional fingerprint image includes not only the fingerprint pattern, but also the degree of concavity and convexity of each point in the fingerprint pattern. The degree of concavity and convexity can also be understood as a relative height or relative distance of each point in the fingerprint pattern with respect to a same reference plane.

Third, determining a similarity between the fingerprint image and a preset fingerprint image, wherein the preset fingerprint image is a fingerprint image pre-stored in the electronic device.

After the electronic device 100 acquires the fingerprint image, the electronic device 100 may compare the fingerprint image with a preset fingerprint image to determine the similarity between the fingerprint image and the preset fingerprint image. Namely, the similarity between the fingerprint image of the user's finger in the present operation and the fingerprint image pre-stored in the electronic device 100 is determined.

It should be noted that the fingerprint images of different users are different. Namely, the fingerprint images are unique. In an ideal situation, the fingerprint image of the same finger of the same user should be unique at any time. However, in actual situations, because the skin of the user's finger may be worn and tear, or stained, or the fingerprint identification region is incomplete, there are certain differences in fingerprint identification even for the same user with the same finger at different times. Namely, the fingerprint image of the same user pre-stored in the electronic device 100 may be different from the fingerprint image of the user during actual fingerprint identification, and the similarity between them may also be less than 100%, for example, 80%.

Fourth, determining the ultrasonic fingerprint identification result according to the similarity.

After the electronic device 100 determines the similarity between the fingerprint image and the preset fingerprint image, a fingerprint identification result can be determined according to the similarity. The fingerprint identification result includes fingerprint identification failure and fingerprint identification success. Subsequently, the electronic device 100 can perform corresponding operations according to the fingerprint identification result.

In some embodiments, the step of determining the ultrasonic fingerprint identification result according to the similarity may further include the following sub-steps:
Judging whether the similarity is greater than a similarity threshold;
If the similarity is greater than the similarity threshold, determining that the ultrasonic fingerprint identification is successful.

A similarity threshold may be preset in the electronic device 100. The similarity threshold is the similarity between the actual fingerprint image of the user and the preset fingerprint image that the electronic device 100 considers. The similarity threshold can be set based on experience, or can also be determined after sampling and analyzing a certain amount of users. For example, the similarity threshold may be 80%, that is, only when the similarity between the fingerprint image actually identified by the user acquired by the electronic device 100 and the preset fingerprint image is greater than 80%, the electronic device 100 will determine that the ultrasonic fingerprint identification is the fingerprint identification success.

After the electronic device 100 determines the similarity between the fingerprint image and the preset fingerprint image, the electronic device 100 can determine whether the similarity is greater than the similarity threshold.

If the similarity is not greater than the similarity threshold, the electronic device 100 may consider the fingerprint image currently recognized as an illegal fingerprint and thus determine to be fingerprint identification failure.

If the similarity is greater than the similarity threshold, the electronic device 100 may consider the fingerprint image currently recognized as a legal fingerprint and thus determine to be fingerprint identification success.

It is understandable that the method step of converting, by the second acousto-electric conversion module 80, ultrasonic signals into electrical signals for fingerprint identification is the same as the method step of converting, by the first acousto-electric conversion module 70, ultrasonic signals into electrical signals for fingerprint identification, which does not be repeated here.

In the embodiment of the present disclosure, the first acousto-electric conversion module 70 and the second acousto-electric conversion module 80 use ultrasonic waves to perform fingerprint identification, which can accurately and securely authenticate users. In addition, because the first acousto-electric conversion module 70 and the second acousto-electric conversion module 80 use ultrasonic waves to perform fingerprint identification, there is no need to make holes on the display screen 10, and a screen-to-body ratio is effectively increased.

Step 122: when the category of the trigger instruction includes the sound signal output instruction, according to the sound signal output instruction, controlling at least one of the first acousto-electric conversion module and the second acousto-electric conversion module to convert electrical signals into acoustic signals to implement sound signal output.

The trigger instruction may also include the sound signal output instruction. The sound signal output instruction may be a sound signal output instruction that needs to perform an acousto-electric conversion received by the electronic device 100. The sound signal output instruction may be generated when the user tries to answer a phone call or an audio/video call, may also be generated by the user running a dialing application or an audio/video call application on the electronic device 100, or may further be generated by running an audio/video playback application on the electronic device 100.

For example, when the user's finger touches or presses the display screen 10 of the electronic device 100 to answer a phone call or answer an audio/video call, or when the user runs a dialing application or an audio/video call application on the electronic device 100, or when the user runs an audio/video playback application on the electronic device 100, a processor of the electronic device 100 generates a sound signal output instruction.

123: when the category of the trigger instruction includes the sound signal acquisition instruction, according to the sound signal acquisition instruction, controlling at least one of the first acousto-electric conversion module and the second acousto-electric conversion module to convert acoustic signals to electrical signals to implement sound signal acquisition.

The trigger instruction may also include the sound signal acquisition instruction. The sound signal acquisition instruction may be a sound signal acquisition instruction that needs to perform an acousto-electric conversion received by the electronic device 100. The sound signal acquisition instruction may also be generated when the user attempts to answer a phone call or answer an audio/video call, or may also be generated by the user running a dialing application or an audio/video call application on the electronic device 100, or may further be generated by running a recording application on the electronic device 100.

For example, when the user's finger touches or presses the display screen 10 of the electronic device 100 to answer a phone call or an audio/video call, or when the user runs a dialing application or an audio/video call application on the electronic device 100, or when the user runs a recording application on the electronic device 100, a processor of the electronic device 100 generates a sound signal acquisition instruction.

Referring to FIG. 11, which is a third schematic flowchart of a working mode switching method provided by an embodiment of the present disclosure.

Step 121: when the category of the trigger instruction includes the fingerprint identification instruction, according to the fingerprint identification instruction, controlling at least one of the first acousto-electric conversion module and the second acousto-electric conversion module to implement conversion between ultrasonic signals and electrical signals to implement fingerprint identification includes the following sub-steps:
1211: when the category of the trigger instruction includes the fingerprint identification instruction, determining a safety factor of fingerprint identification corresponding to the fingerprint identification instruction;
In some embodiments, the user can set different security levels for different applications on the electronic device 100. For example, for a requirement for protecting privacy, improving payment security, and the like, when the user unlocks login, opens private files, and performs secure payment operations, and the like, it is often necessary to set an extremely-high-security level, and users can set a higher-security level when performing operations such as ordinary audio/video playback and web browsing.

When the electronic device 100 receives a fingerprint identification instruction, it needs to determine the safety factor of a fingerprint identification operation corresponding to the fingerprint identification instruction. A fingerprint identification instruction with a high safety factor corresponds to an extremely-high-security level, and a fingerprint identification instruction with a low safety factor corresponds to a higher-security level.
1212: if the safety factor is greater than a safety factor threshold, controlling the first acousto-electric conversion module and the second acousto-electric conversion module to implement the conversion between ultrasonic signals and electrical signals according to the trigger instruction;
1213: if the safety factor is not greater than the safety factor threshold, controlling the first acousto-electric conversion module or the second acousto-electric conversion module to implement the conversion between ultrasonic signals and electrical signals according to the trigger instruction.

It is understandable that the safety factor threshold is pre-stored in the electronic device 100, and the safety factor threshold corresponds to the extremely-high-security level. Namely, when the safety factor of the fingerprint identification operation corresponding to the fingerprint identification instruction is greater than the safety factor threshold, the fingerprint identification operation corresponding to the fingerprint identification instruction corresponds to an extremely-high-security level; when the safety factor of the fingerprint identification operation corresponding to the fingerprint identification instruction is less than the safety factor threshold, the fingerprint identification operation corresponding to the fingerprint identification instruction corresponds to a higher-security level.

When the safety factor is greater than the safety factor threshold, the first acousto-electric conversion module 70 and the second acousto-electric conversion module 80 are controlled to implement the conversion between the ultrasonic signals and the electrical signals according to the trigger instruction. Namely, the electronic device 100 needs to perform two fingerprint identification operations. The first acousto-electric conversion module 70 is controlled to transmit ultrasonic signals according to the trigger instruction to perform the first fingerprint identification operation. The second acousto-electric conversion module 80 is controlled to transmit ultrasonic signals according to the trigger instruction to perform the second fingerprint identification operation. Only when the two fingerprint identification operations are successful, the trigger instruction can execute an operation corresponding to an application with the extremely-high-security level.

When the safety factor is not greater than the safety factor threshold, the first acousto-electric conversion module 70 or the second acousto-electric conversion module 80 is controlled to implement the conversion between the ultrasonic signals and the electrical signals according to the trigger instruction. Namely, the electronic device 100 can perform one fingerprint identification operation. The first acousto-electric conversion module 70 or the second acousto-electric conversion module 80 is controlled to transmit ultrasonic signals according to the trigger instruction to perform a single fingerprint identification operation. If once the fingerprint identification operation is successful, the trigger instruction can execute an operation corresponding to an application with the higher-security level.

In the embodiment of the present disclosure, the first acousto-electric conversion module 70 and the second screen module 80 can separately perform under-screen fingerprint identification to utilize the ultrasonic fingerprint function for collecting fingerprint information, which facilitates unlocking and improves the efficiency of unlocking. Further, the security of under-screen fingerprint identification can also be improved. The first acousto-electric conversion module 70 and the second acousto-electric conversion module 80 can also perform under-screen fingerprint identification at the same time. The first acousto-electric conversion module 70 and the second acousto-electric conversion module 80 utilize the ultrasonic fingerprint function. When a fingerprint identification result of the first acoustic-electric conversion module 70 and a fingerprint identification result of the second acoustic-electric conversion module 80 are both successful, the fingerprint recognition of the electronic device 100 can be successfully unlocked, which greatly improves the security of fingerprint identification.

Referring to FIG. 12, which is a fourth schematic flowchart of a working mode switching method provided by an embodiment of the present disclosure.

In some embodiments, the first acousto-electric conversion module 70 and the second acousto-electric conversion module 80 may be located at two ends of the electronic device 100, respectively. Namely, the first acousto-electric conversion module 70 is located at one end of the electronic device 100, and the second acousto-electric conversion module 80 is located at the other end of the electronic device 100. One of the first acousto-electric conversion module 70 and the second acousto-electric conversion module 80 can realize a sound signal acquisition function, and the other can realize a sound signal output function.

It is understandable that, in step 122, when the category of the trigger instruction includes a sound signal acquisition instruction, according to the sound signal acquisition instruction, controlling at least one of the first acousto-electric conversion module and the second acousto-electric conversion module to convert the acoustic signals into electrical signal further includes:
1221: when the category of the trigger instruction includes a sound signal acquisition instruction, determining a size relationship between a first distance and a second distance.

In an application scenario where the category of the trigger instruction includes a sound signal acquisition instruction, a posture of the electronic device 100 can be detected. The posture can be a forward placement posture of the electronic device, or a reverse placement posture of the electronic device. The posture can be detected by sensing devices, such as a gyroscope and a gravity sensor, inside the electronic device.

By detecting the posture of the electronic device 100, the electronic device 100 can determine a top end 90 of the electronic device. The top end 90 of the electronic device may use a horizontal plane as a reference surface. One of the two ends of the electronic device 100 with a higher height from the horizontal plane is defined as the top end 90 of the electronic device, and one of the two ends of the electronic device 100 with a lower height from the horizontal plane is defined as a bottom end of the electronic device. For example, taking the electronic device 100 in the forward placement posture as a reference, in which the first acousto-electric conversion module 70 is disposed at the bottom of the electronic device 100, and the second acousto-electric conversion module 80 is located at the top of the electronic device 100, when the electronic device 100 is in the forward placement posture, the end that the second acousto-electric conversion module 80 is placed is the top end 90 of the electronic device in this posture; when the electronic device 100 is in the reverse placement posture, the end that the conversion module 70 is placed is the top end 90 of the electronic device in this posture.

A first distance D1 is a distance between the first acousto-electric conversion module 70 and the top end 90 of the electronic device. A second distance D2 is a distance between the second acousto-electric conversion module 80 and the top end 90 of the electronic device. Namely, in an application scenario where the category of the trigger instruction includes a sound signal acquisition instruction, the electronic device 100 also needs to determine which of the first acousto-electric conversion module 70 and the second acousto-electric conversion module 80 is located on the top of the electronic device 100. Generally, the acousto-electric module located on the top of the electronic device 100 needs to convert electrical signals into acoustic signals to implement a sound signal output function, and the acousto-electric module located at the bottom of the electronic device 100 needs to convert the acoustic signals into the electrical signals to implement a sound signal acquisition function. It is understandable that the determination of the first distance and the second distance can be calculated according to data obtained by detection of a gravity sensor, a gyroscope, a distance sensor, and other devices inside the electronic device 100 combined with a certain mathematical model or formula; the determination of the first distance and the second distance can also be summarized according to an installation position of the first acousto-electric conversion module 70 and the second acousto-electric conversion module 80 and data detected by the gyroscope and the gravity sensor.
1222: if the first distance is greater than the second distance, controlling the first acousto-electric conversion module to convert acoustic signals into electrical signals, and controlling the second acousto-electric conversion module to convert electrical signals into acoustic signals;
1223: if the first distance is not greater than the second distance, controlling the first acousto-electric conversion module to convert electrical signals into acoustic signals, and controlling the second acousto-electric conversion module of the electronic device to convert acoustic signals into electrical signals.

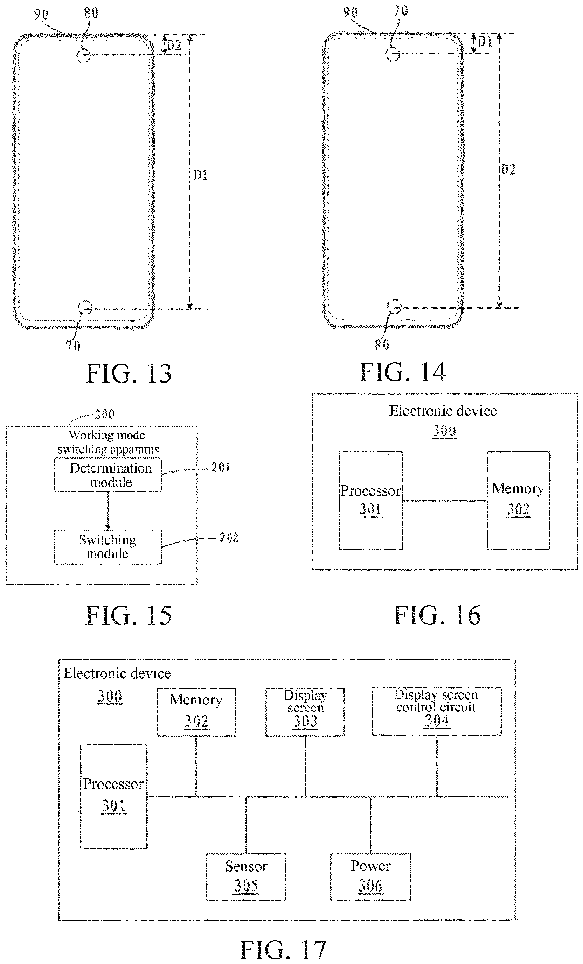

Refer to FIGs. 12 and 13, wherein FIG. 13 is a schematic location diagram of the first acousto-electric conversion module and the second acousto-electric conversion module in FIG. 12.

When the first distance D1 is greater than the second distance D2, that is, when the electronic device 100 receives a trigger instruction, the first acousto-electric conversion module 70 is located at the bottom of the electronic device 100, and the second acousto-electric conversion module 80 is located on the top of the electronic device 100. The first acousto-electric conversion module 70 converts the acoustic signals into the electrical signals to implement the sound signal acquisition function. The second acousto-electric conversion module 80 converts the electrical signals into the acoustic signals to implement the sound signal output function.

Refer to FIGs. 12 and 14, FIG. 14 is another schematic location diagram of the first acousto-electric conversion module and the second acousto-electric conversion module in FIG. 12.

When the first distance D1 is not greater than the second distance D2, that is, when the electronic device 100 receives a trigger instruction, the first acousto-electric conversion module 70 is located on the top of the electronic device 100, and the second acousto-electric conversion module 80 is located at the bottom of the electronic device 100. The first acousto-electric conversion module 70 converts the electrical signals into the acoustic signals to implement the sound signal output function. The second acousto-electric conversion module 80 converts the acoustic signals into the electrical signals to implement the sound signal acquisition function.

In some embodiments, when the category of the trigger instruction includes a sound signal output instruction, according to the sound signal output instruction, the first acousto-electric conversion module 70 and the second acousto-electric conversion module 80 are controlled to convert electrical signals into acoustic signals to implement sound signal output.

It is understandable that, in a process that the first acousto-electric conversion module 70 converts electrical signals into acoustic signals, a driving signal of the first acousto-electric conversion module 70 received by the piezoelectric material of the first acousto-electric conversion module 70 can be a drive signal with higher power to implement a speaker function of the first acousto-electric conversion module 70; in a process of the second acousto-electric conversion module 80 converts the electrical signals into the acoustic signals, a driving signal of the second acousto-electric conversion module 80 received by the piezoelectric material of the second acousto-electric conversion module 80 can be a drive signal with higher power to implement a speaker function of the second acousto-electric conversion module 80.

In the working mode switching method of the present disclosure, the first acousto-electric conversion module 70 and the second acousto-electric conversion module 80 integrate a fingerprint identification function, a sound signal output function, and a sound signal acquisition function. When the electronic device 100 receives a trigger instruction, the electronic device 100 determines the category of the trigger instruction. If the category of the trigger instruction includes the fingerprint identification instruction, the electronic device 100 controls at least one of the first acousto-electric conversion module 70 and the second acousto-electric conversion module 80 performs fingerprint identification according to the trigger instruction. If the category of the trigger instruction includes a sound signal output instruction, according to the sound signal output instruction, at least one of the first acousto-electric conversion module 70 and the second acousto-electric conversion module 80 is controlled to convert electrical signals into acoustic signals. If the category of the trigger instruction includes a sound signal acquisition instruction, according to the sound signal output instruction, at least one of the first acousto-electric conversion module 70 and the second acousto-electric conversion module 80 is controlled to convert the acoustic signals into the electrical signals.

The working mode switching method of the present disclosure is simple to operate. The first acousto-electric conversion module 70 and the second acousto-electric conversion module 80 can have fingerprint identification, sound signal output, and sound signal acquisition functions. No need to make holes on the display screen 10. The display screen 10 can have a larger screen-to-body ratio. In addition, both of the first acousto-electric conversion module 70 and the second acousto-electric conversion module 80 can realize mutual conversion of acoustic signals and electrical signals. Regardless of whether the user is holding the electronic device 100 in a forward direction or holding the electronic device 100 in a reverse direction, the electronic device 100 can ensure that the acousto-electric module at the top end 90 of the electronic device realizes the sound signal output function, and the acousto-electric module at the bottom of the electronic device realizes the sound signal acquisition function, thereby ensuring that the electronic device 100 held at the user in the forward or reverse direction can realize a normal phone call function and an audio/video call function, and the user experience is better.

In some embodiments, when the category of the trigger instruction includes a sound signal output instruction, according to the sound signal output instruction, the electronic device 100 can control the first acousto-electric conversion module 70 or the second acousto-electric conversion module 80 in the electronic device 100 converts electrical signals into acoustic signals, wherein the first acousto-electric conversion module 70 or the second acousto-electric conversion module 80 can realize the sound signal output function.

It is understandable that when the category of trigger instruction includes a sound signal output instruction, according to the sound signal output instruction, the electronic device 100 can control the first acousto-electric conversion module 70 and the second acousto-electric conversion module 80 in the electronic device 100 to convert electrical signals into acoustic signals, wherein the first acousto-electric conversion module 70 and the second acousto-electric conversion module 80 can realize the sound signal output function. When the first acousto-electric conversion module 70 and the second acousto-electric conversion module 80 are respectively located at the top end and bottom end of the electronic device 100, in a transverse-screen state, the first acousto-electric conversion module 70 and the second acousto-electric conversion module 80 can realize the generation of left and right channels. The user can receive acoustic signals from both ends of the electronic device 100, which improves the user's sense of experience.

In some embodiments, when the category of the trigger instruction includes a sound signal acquisition instruction, according to the sound signal acquisition instruction, the electronic device 100 can control the first acousto-electric conversion module 70 or the second acousto-electric conversion module 80 in the electronic device 100 to convert acoustic signals into electrical signals. The first acousto-electric conversion module 70 or the second acousto-electric conversion module 80 can realize a sound signal acquisition function. The first acousto-electric conversion module 70 or the second acousto-electric conversion module 80 can realize a sound recording function.

It is understandable that when the category of the trigger instruction includes a sound signal acquisition instruction, according to the sound signal acquisition instruction, the electronic device 100 can control the first acousto-electric conversion module 70 and the second acousto-electric conversion module 80 in the electronic device 100 to convert acoustic signals into electrical signals. The first acousto-electric conversion module 70 and the second acousto-electric conversion module 80 can realize the sound signal acquisition function, and the first acousto-electric conversion 70 and the second acousto-electric conversion module 80 can realize the sound recording function at the same time. Using two acousto-electric conversion modules to collect acoustic signals can improve the quality of recorded sound.

It is understandable that when the electronic device 100 of the present disclosure receives a trigger instruction and determines the category of the trigger instruction, a determination may not be made according to a sequence of a fingerprint identification instruction, a sound signal output instruction, and a sound signal acquisition instruction. Namely, the electronic device 100 determines the category of a first trigger instruction, and directly executes the corresponding category of functional operation, and does not need to judge in sequence. If the first trigger instruction is not the fingerprint identification instruction, the sound signal output instruction, or the sound signal acquisition instruction, the first acousto-electric conversion module 70 and the second acousto-electric conversion module 80 do not perform related operations and are in a dormant state.

It is understandable that when the electronic device 100 of the present disclosure receives the first trigger instruction and determines the category of the trigger instruction, it can also be determined in sequence in an order of the fingerprint identification instruction, the sound signal output instruction, and the sound signal acquisition instruction. Namely, the electronic device 100 first determines whether the trigger instruction is the fingerprint identification instruction, when the trigger instruction is a fingerprint identification instruction, ultrasonic fingerprint identification is performed; when the trigger instruction is not the fingerprint identification instruction, it continues to determine whether the trigger instruction is the sound signal acquisition instruction; when the trigger instruction is the sound signal acquisition instruction, a judgement of the first distance and the second distance is performed; when the trigger instruction is not a sound signal acquisition instruction, it can continue to determine whether the trigger instruction is the sound signal output instruction, when the trigger instruction is the sound signal output instruction, an operation of the sound signal output instruction is performed.

In some embodiments, the electronic device 100 may also perform the following steps:
When the electronic device 100 receives the trigger instruction, determining a category of the trigger instruction;
When the category of the trigger instruction is not a fingerprint identification instruction, a sound signal output instruction, or a sound signal acquisition instruction, turning off, by the electronic device 100, the first acousto-electric conversion module 70 and the second acousto-electric conversion module 80;
When the trigger instruction is the fingerprint identification instruction, controlling, by the electronic device 100, the first acousto-electric conversion module 70 or the second acousto-electric conversion module 80 to perform a first ultrasonic fingerprint identification; and also controlling, by the electronic device 100, the acousto-electric conversion module 70 and the second acousto-electric conversion module 80 to perform a first ultrasonic fingerprint identification at the same time;
When the trigger instruction is not the fingerprint identification instruction, continuing to determine whether the trigger instruction includes a sound signal acquisition instruction;
When the trigger instruction includes the sound signal acquisition instruction, continuing to determine whether the first distance D1 between the first acousto-electric conversion module 70 and the top end 90 of the electronic device is greater than the second distance D2 between the second acousto-electric conversion module 80 and the top end 90 of the electronic device;
If the first distance D1 is greater than the second distance D2, converting, by the first acousto-electric conversion module 70, acoustic signals into electrical signals, and converting, by the second acousto-electric conversion module 80, electrical signals into acoustic signals;
If the first distance D1 is not greater than the second distance D2, converting, by the first acousto-electric conversion module 70, acoustic signals into electrical signals, and converting, by the second acousto-electric conversion module 80, electrical signals into acoustic signals.

In the embodiment mentioned above, the processor of the electronic device 100 and the first acousto-electric module 70 and the second acousto-electric module 80 can be connected via a two-way data transmission signal connection line, a power supply line, and a function selection signal line, wherein the function selection signal line can output via the general-purpose input and output interface (GPIO) to select the first acousto-electricity module and the second acousto-electricity module.

Refer to Table 1, which is a binary reference table for a selection of a fingerprint identification function, an acousto-electric conversion function, and an electro-acoustic conversion function of the first acousto-electric conversion module and the second acousto-electric conversion module. When the first acousto-electric conversion module 70 is not working, an output of the first acousto-electric conversion module via the GPIO is 00, and when the second acousto-electric conversion module 80 is not working, an output of the second acousto-electric conversion module via the GPIO is 00; when the acousto-electric conversion module 70 performs ultrasonic fingerprint identification, an output of the first acousto-electric conversion module via the GPIO is 11, and when the second acousto-electric conversion module 80 performs ultrasonic fingerprint identification, an output of the second acousto-electric conversion module via the GPIO is 11; when the first acousto-electric conversion module 70 converts electrical signals into acoustic signals, an output of the first acousto-electric conversion module via the GPIO is 10, and when the second acousto-electric conversion module 80 converts electrical signals into acoustic signals, an output of the second acousto-electric conversion module via the GPIO is 10; when the first acousto-electric conversion module 70 converts the acoustic signals into the electrical signals, an output of the first acousto-electric conversion module via the GPIO is 01, and when the second acousto-electric conversion module 80 converts the acoustic signals into the electrical signals, an output of the second acousto-electrical conversion module via the GPIO is 01.

**Table 1: The binary reference table for the selection of the fingerprint identification function, the acousto-electric conversion function, and the electro-acoustic conversion function of the first acousto-electric conversion module and the second acousto-electric conversion module:**

| | Whether the fingerprint identification is used to work | Whether electrical signals are converted into acoustic signals to work | Whether acoustic signals is converted to electrical signals to work | Output of the first acousto-electric conversion module via GPIO | Output of the second acousto-electric conversion module via GPIO |
|---|---|---|---|---|---|
| First acousto-electric conversion module | No | No | No | 00 | 00 |
| Second acousto-electric conversion module | No | No | No | | |
| First acousto-electric conversion module | Yes | No | No | 11 | 11 |
| Second acousto-electric conversion module | Yes | No | No | | |
| First acousto-electric conversion module | No | Yes | No | 10 | 01 |
| Second acousto-electric conversion module | No | No | Yes | | |
| First acousto-electric conversion module | No | No | Yes | 01 | 10 |
| Second acousto-electric conversion module | No | Yes | No | | |

It is understandable that the processor of the electronic device 100 and the first acousto-electric module 70 and the second acousto-electric module 80 can also select the first acousto-electric conversion module and the second acousto-electric conversion module through multiplexing data transmission lines.
The embodiment of the present disclosure also provides a working mode switching apparatus, which is applied to the electronic device in the embodiments mentioned above. The electronic device may include a display screen, a first acousto-electric conversion module, and a second acousto-electric conversion module. The first acousto-electric conversion module and the second acousto-electric conversion module are located on one side of the display screen and connected to the display screen, or the first acousto-electric conversion module and the second acousto-electric conversion module are located inside the display screen; wherein the first acousto-electric conversion module is used to implement conversion between ultrasonic or acoustic signals and electrical signals, and the second acousto-electric conversion module is also used to implement conversion between ultrasonic or acoustic signals and electrical signals;
The working mode switching apparatus includes:
   A determination module is used to determine a category of a trigger instruction when the electronic device receives the trigger instruction;
   The switching module is used to control the first acousto-electric conversion module and the second acousto-electric conversion module in the electronic device to be switched to a corresponding working mode according to the category of the trigger instruction.

In some embodiments, the category of the trigger instruction includes a fingerprint identification instruction, a sound signal output instruction, and a sound signal acquisition instruction.

The switching module can perform the following operations:
When the category of the trigger instruction includes a fingerprint identification instruction, according to the fingerprint identification instruction, controlling, by the switching module, at least one of the first acousto-electric conversion module and the second acousto-electric conversion module to implement conversion between ultrasonic signals and electrical signals to implement fingerprint identification;
When the category of the trigger instruction includes a sound signal output instruction, according to the sound signal output instruction, controlling, by the switching module, at least one of the first acousto-electric conversion module and the second acousto-electric conversion module to convert electrical signals into acoustic signals to implement the sound signal output;
When the category of the trigger instruction includes a sound signal acquisition instruction, according to the sound signal acquisition instruction, controlling, by the switching module, at least one of the first acousto-electric conversion module and the second acousto-electric conversion module to convert acoustic signals into electrical signals to implement sound signal acquisition.

In some embodiments, the switching module may also perform the following operations:
When the category of the trigger instruction includes a fingerprint identification instruction, determining, by the switching module, a safety factor of a fingerprint identification operation corresponding to the fingerprint identification instruction;
If the safety factor is greater than a safety factor threshold, controlling, by the switching module, the first acousto-electric conversion module and the second acousto-electric conversion module to implement the conversion between the ultrasonic signals and the electrical signals according to the trigger instruction;
If the safety factor is less than the safety factor threshold, controlling, by the switching module, the first acousto-electric conversion module or the second acousto-electric conversion module to implement the conversion between the ultrasonic signals and the electrical signals according to the trigger instruction.

Referring to FIG. 15, which is a schematic structural diagram of a working mode switching apparatus provided by an embodiment of the present disclosure. The working mode switching apparatus 200 may include a determination module 201 and a switching module 202.

The determination module 201 is used to determine the category of the trigger instruction when the electronic device receives the trigger instruction;

The switching module 202 is used to control the first acousto-electric conversion module 70 and the second acousto-electric conversion module 80 in the electronic device to be switched to a corresponding working mode according to the category of the trigger instruction.

The categorys of trigger instructions include a fingerprint identification instruction, a sound signal output instruction, and a sound signal acquisition instruction.

The switching module 202 can perform the following operations:
When the category of trigger instruction includes a fingerprint identification instruction, according to the fingerprint identification instruction, the switching module 202 controls at least one of the first acousto-electric conversion module 70 and the second acousto-electric conversion module 80 to implement conversion between ultrasonic signals and electrical signals to implement fingerprint identification;
When the category of the trigger instruction includes a sound signal output instruction, according to the sound signal output instruction, the switching module 202 controls at least one of the first acousto-electric conversion module 70 and the second acousto-electric conversion module 80 converts electrical signals into acoustic signals to implement sound signal output;
When the category of the trigger instruction includes a sound signal acquisition instruction, according to the sound signal acquisition instruction, the switching module 202 controls at least one of the first acousto-electric conversion module 70 and the second acousto-electric conversion module 80 converts the acoustic signals into the electrical signals to implement sound signal acquisition.

The switching module 202 may also perform the following operations:
When the category of the trigger instruction includes a fingerprint identification instruction, determining, by the switching module 202, a safety factor of a fingerprint identification operation corresponding to the fingerprint identification instruction;
If the safety factor is greater than the safety factor threshold, controlling, by the switching module 202, the first acousto-electric conversion module 70 and the second acousto-electric conversion module 80 to implement conversion between ultrasonic signals and electrical signals according to the trigger instruction;
If the safety factor is less than a safety factor threshold, controlling, by the switching module 202, the first acousto-electric conversion module 70 or the second acousto-electric conversion module 80 to implement the conversion between ultrasonic signals and electrical signals according to the trigger instruction.

In the embodiment of the present disclosure, the switching module 202 can separately control the first acousto-electric conversion module 70 and the second screen module 80 to perform under-screen fingerprint identification to utilize the ultrasonic fingerprint function for collecting fingerprint information, which facilitates unlocking and improves the efficiency of unlocking. Further, the security of under-screen fingerprint identification can also be improved. The switching module 202 can also control the first acousto-electric conversion module 70 and the second acousto-electric conversion module 80 to perform under-screen fingerprint identification at the same time. The first acousto-electric conversion module 70 and the second acousto-electric conversion module 80 use the ultrasonic fingerprint function to acquire fingerprint information together. When a fingerprint identification result of the first acousto-electric conversion module 70 and a fingerprint identification result of the second acousto-electric conversion module 80 are both successful, the fingerprint identification of the electronic device 100 can be successfully unlocked. The security of fingerprint identification is greatly improved.

The working mode switching apparatus 200 of the present disclosure has a simple structure. The first acousto-electric conversion module 70 and the second acousto-electric conversion module 80 can have fingerprint identification, sound signal output, and sound signal acquisition functions. No need to make holes on the display screen 10 to save an area of the holes of the display 10. The display screen 10 can have a larger screen-to-body ratio. In addition, the switching module 202 can control the first acousto-electric conversion module 70 and the second acousto-electric conversion module 80 to implement mutual conversion of acoustic signals and electrical signals. Regardless of whether the user is holding the electronic device 100 in a forward direction or holding the electronic device 100 in a reverse direction, the working mode switching apparatus 200 can ensure that an acousto-electric module at a top end 90 of the electronic device realizes a sound signal output function, and the acousto-electric module at a bottom of the electronic device realizes a sound signal acquisition function, thereby ensuring that the electronic device 100 held at the user in the forward or reverse direction can realize a normal phone call function and an audio/video call function, and the user experience is better.

The embodiment of the present disclosure also provides an electronic device 300. The electronic device 300 may be a smart phone, a tablet computer, a game device, an AR (augmented reality) device, a car, a data storage device, an audio playback device, a video playback device, a notebook computer, a desktop computing device, a wearable device such as electronic watches, electronic glasses, electronic helmets, electronic bracelets, electronic necklaces, electronic clothing and other devices.

The electronic device 300 includes a cover plate 20, a display screen 10, a first acousto-electric conversion module 70, and a second acousto-electric conversion module 80. The first acousto-electric conversion module 70 and the second acousto-electric conversion module 80 are located at a lower part of the cover plate 20. In addition, the first acousto-electric conversion module 70 and the second acousto-electric conversion module 80 may be located inside the display screen 10, inside the display screen 10, and may also be located between the display screen 10 and the cover plate 20. The first acousto-electric conversion module 70 and the second acousto-electric conversion module 80 are used for ultrasonic fingerprint identification and conversion of electrical signal and acoustic signals.

Referring to FIG. 16, which is a second schematic structural diagram of an electronic device according to an embodiment of the present disclosure. The electronic device 300 further includes a processor 301 and a memory 302, wherein the processor 301 and the memory 302 are electrically connected.

The processor 301 is a control central part of the electronic device 300, it uses various interfaces and lines to connect various parts of the entire electronic device 300. By running or calling computer programs stored in the memory 302 and calling the data stored in the memory 302, various functions and processing data of the electronic device 300 are executed, thereby overall monitoring of the electronic device 300.

In this embodiment, according to the following steps, the processor 301 in the electronic device 300 loads instructions corresponding to the process of one or more computer programs into the memory 302 and the computer program stored in the memory 302 to be called by the processor 301 to be used for:
When the electronic device receives a trigger instruction, determining the category of the trigger instruction;

According to the category of the trigger instruction, controlling the first acousto-electric conversion module 70 and the second acousto-electric conversion module 80 in the electronic device to switch to a corresponding working mode.
In some embodiments, the category of the trigger instruction includes a fingerprint identification instruction, a sound signal output instruction, and a sound signal acquisition instruction;
According to the category of the trigger instruction, in the step of controlling the first acousto-electric conversion module 70 and the second acousto-electric conversion module 80 in the electronic device to switch to the corresponding working mode, the processor 301 is used for:
   When the category of the trigger instruction includes a fingerprint identification instruction, according to the fingerprint identification instruction, controlling, by the processor 301, at least one of the first acousto-electric conversion module 70 and the second acousto-electric conversion module 80 to implement conversion between ultrasonic signals and electrical signals to implement fingerprint identification;
   When the category of the trigger instruction includes a sound signal output instruction, according to the sound signal output instruction, controlling, by the processor 301, at least one of the first acousto-electric conversion module 70 and the second acousto-electric conversion module 80 to convert the electrical signals into the acoustic signals to implement the sound signal output;
   When the category of the trigger instruction includes a sound signal acquisition instruction, according to the sound signal acquisition instruction, controlling, by the processor 301, at least one of the first acousto-electric conversion module 70 and the second acousto-electric conversion module 80 to convert acoustic signals into electrical signals to implement the sound signal acquisition.
   When the category of the trigger instruction includes a fingerprint identification instruction, according to the fingerprint identification instruction, in the step that controlling, by the processor 301, at least one of the first acousto-electric conversion module 70 and the second acousto-electric conversion module 80 to implement conversion between ultrasonic signals and electrical signals to implement fingerprint identification, the processor 301 is used for:
   When the category of the trigger instruction includes a fingerprint identification instruction, determining a safety factor of the fingerprint identification instruction;
If the safety factor is greater than a safety factor threshold, controlling, by the processor 301, the first acousto-electric conversion module 70 and the second acousto-electric conversion module 80 to transmit ultrasonic signals according to the trigger instruction;
If the safety factor is less than the safety factor threshold, controlling, by the processor 301, the first acousto-electric conversion module 70 or the second acousto-electric conversion module 80 to transmit ultrasonic signals according to the trigger instruction.

The memory 302 can be used to store computer programs and data. The computer program stored in the memory 302 contains instructions that can be executed in the processor 301. Computer programs can be composed of various functional modules. The processor 301 executes various functional applications and data processing by calling a computer program stored in the memory 302.

Referring to FIG. 17, which is a third schematic structural diagram of an electronic device provided by an embodiment of the present disclosure.

The electronic device 300 further includes a display screen 303, a display screen control circuit 304, a sensor 305, and a power supply 306. The processor 301 is electrically connected to the display screen 303, the display screen control circuit 304, the sensor 305, and the power supply 306, respectively.

The display screen 303 may be used to display information input by the user or information provided to the user and various graphical user interfaces of the electronic device 300. These graphical user interfaces may be composed of images, text, icons, videos, and any combination thereof.

The display screen control circuit 304 is electrically connected to the display screen 303 for controlling the display screen 303 to display information.

The sensor 305 is used to collect external environmental information. The sensor 305 may include one or more of sensors such as an ultrasonic sensor, an environmental brightness sensor, an acceleration sensor, and a gyroscope.

The power supply 306 is used to supply power to various components of the electronic device 300. In some embodiments, the power supply 306 may be logically connected to the processor 301 via a power management system, so that functions such as charging, discharging, and power consumption management can be managed by the power management system.

Although not shown in FIG. 17, the electronic device 300 may also include a radio frequency module, a camera, a Bluetooth module, and the like, which will not be repeated here.

It can be seen from the above that an embodiment of the present disclosure provides an electronic device 300 that performs the following steps: when the electronic device 300 receives a trigger instruction, determining, by the electronic device 300, the category of the trigger instruction, if a category of the trigger instruction includes a fingerprint identification instruction, controlling, by the electronic device 300, at least one of the first acousto-electric conversion module 70 and the second acousto-electric conversion module 80 to perform fingerprint identification according to the trigger instruction. If the category of the trigger instruction includes a sound signal output instruction, according to the sound signal output instruction, controlling at least one of the first acousto-electric conversion module 70 and the second acousto-electric conversion module 80 to convert electrical signals into acoustic signals. If the category of the trigger instruction includes a sound signal acquisition instruction, according to the sound signal output instruction, controlling at least one of the first acousto-electric conversion module 70 and the second acousto-electric conversion module 80 to convert acoustic signals into electrical signals.

An embodiment of the present disclosure further provides a storage medium in which a computer program is stored, and when the computer program is run on a computer, the computer is caused to execute a working mode switching method described in any one of embodiments mentioned above.

For example, in some embodiments, when the computer program runs on a computer, the computer is used to cause executions for:
When the electronic device receives a trigger instruction, determining the category of the trigger instruction;
According to the category of the trigger instruction, controlling the first acousto-electric conversion module and the second acousto-electric conversion module in the electronic device to switch to a corresponding working mode.

It should be noted that those of ordinary skill in the art can understand that all or part of the steps in the various methods of the embodiments mentioned above can be completed by instructing relevant hardware through a computer program, and the computer program can be stored in a computer-readable storage medium. The storage medium may include, but is not limited to: a read only memory (ROM), a random access memory (RAM), a magnetic disk or optical disk, and the like.

The working mode switching method, apparatus, storage medium, and electronic device provided by the embodiments of the present disclosure are described in detail above. Herein, specific examples are used to illustrate the principles and implementation of the present disclosure. The descriptions of the above examples are only used to help understand the methods and core ideas of the present disclosure. Meanwhile, for those skilled in the art, according to the principles of the present disclosure, the specific implementation and the scope of application will be changed. In summary, the content of this specification should not be construed as a limitation to the present application.

## Claims

1. An electronic device, comprising:
a display screen;
a first acousto-electric conversion module, wherein the first acousto-electric conversion module is located on one side of the display screen and connected to the display screen, and wherein the first acousto-electric conversion module is configured to implement conversion between ultrasonic or acoustic signals and electrical signals; and
a second acousto-electric conversion module, wherein the second acousto-electric conversion module is located on one side of the display screen and connected to the display screen, and wherein the second acousto-electric conversion module is also configured to implement conversion between ultrasonic or acoustic signals and electrical signals.

2. The electronic device as claimed in claim 1, wherein the first acousto-electric conversion module comprises:
a first piezoelectric material layer, wherein the first piezoelectric material layer is configured to transmit ultrasonic or acoustic signals when a driving signal is applied to the first piezoelectric material layer, and the first piezoelectric material layer is configured to receive ultrasonic or acoustic signals;
a first electrode layer connected to the first piezoelectric material layer, wherein the first electrode layer is configured to apply the driving signal to the first piezoelectric material layer.

3. The electronic device as claimed in claim 2, wherein the first electrode layer comprises:
a first sub-electrode layer disposed on one side of the first piezoelectric material layer and connected to the first piezoelectric material layer;
a second sub-electrode layer disposed on the other side of the first piezoelectric material layer and connected to the first piezoelectric material layer;
wherein the first sub-electrode layer and the second sub-electrode layer are configured to jointly apply the driving signal to the first piezoelectric material layer.

4. The electronic device as claimed in claim 1, wherein the second acousto-electric conversion module comprises:
a second piezoelectric material layer, wherein the second piezoelectric material layer is configured to transmit ultrasonic or acoustic signals when a driving signal is applied to the second piezoelectric material layer, and the second piezoelectric material layer is configured to receive ultrasonic or acoustic signals;
a second electrode layer connected to the second piezoelectric material layer, wherein the second electrode layer is configured to apply the driving signal to the second piezoelectric material layer.

5. The electronic device as claimed in claim 4, wherein the second electrode layer comprises:
a third sub-electrode layer disposed on one side of the second piezoelectric material layer and connected to the second piezoelectric material layer;
a fourth sub-electrode layer disposed on the other side of the second piezoelectric material layer and connected to the second piezoelectric material layer;
wherein the third sub-electrode layer and the fourth sub-electrode layer are configured to jointly apply the driving signal to the second piezoelectric material layer.

6. The electronic device as claimed in claim 1, wherein the first acousto-electric conversion module is disposed on one side of the display screen away from a display surface, and the second acousto-electric conversion module is also disposed on the side of the display screen away from the display surface.

7. The electronic device as claimed in claim 1, further comprising:
a cover plate, wherein the cover plate is located on one side of the display screen having a display surface;
wherein the first acousto-electric conversion module is disposed between the display screen and the cover plate;
wherein the second acousto-electric conversion module is also disposed between the display screen and the cover plate.

8. An electronic device, including:
a display screen;
a first acousto-electric conversion module, wherein the first acousto-electric conversion module is located inside the display screen, and the first acousto-electric conversion module is configured to implement conversion between ultrasonic or acoustic signals and electrical signals; and
a second acousto-electric conversion module, wherein the second acousto-electric conversion module is located inside the display screen, and the second acousto-electric conversion module is also configured to implement conversion between ultrasonic or acoustic signals and electrical signals.

9. The electronic device as claimed in claim 8, wherein the display screen comprises:
a display layer configured to display information;
a first substrate layer, wherein the first substrate layer is located on one side of the display layer; and
a second substrate layer, wherein the second substrate layer is located on the other side of the display layer;
wherein the first acousto-electric conversion module is located between the display layer and the first substrate layer, or between the display layer and the second substrate layer;
wherein the second acousto-electric conversion module is located between the display layer and the first substrate layer, or between the display layer and the second substrate layer.

10. The electronic device as claimed in claim 8, wherein the first acousto-electric conversion module comprises:
a first piezoelectric material layer, wherein the first piezoelectric material layer is configured to transmit ultrasonic or acoustic signals when a driving signal is applied to the first piezoelectric material layer, and the first piezoelectric material layer is configured to receive ultrasonic or acoustic signals;
the first electrode layer connected to the first piezoelectric material layer, wherein the first electrode layer is configured to apply the driving signal to the first piezoelectric material layer.

11. The electronic device of claim 10, wherein the first electrode layer comprises:
a first sub-electrode layer disposed on one side of the first piezoelectric material layer and connected to the first piezoelectric material layer;
a second sub-electrode layer disposed on the other side of the first piezoelectric material layer and connected to the first piezoelectric material layer;
wherein the first sub-electrode layer and the second sub-electrode layer are configured to jointly apply the driving signal to the first piezoelectric material layer.

12. The electronic device as claimed in claim 8, wherein the second acousto-electric conversion module comprises:
a second piezoelectric material layer, wherein the second piezoelectric material layer is configured to transmit ultrasonic or acoustic signals when a driving signal is applied to the second piezoelectric material layer, and the second piezoelectric material layer is configured to receive ultrasonic or acoustic signals;
a second electrode layer connected to the second piezoelectric material layer, wherein the second electrode layer is configured to apply the driving signal to the second piezoelectric material layer.

13. The electronic device of claim 12, wherein the second electrode layer comprises:
a third sub-electrode layer disposed on one side of the second piezoelectric material layer and connected to the second piezoelectric material layer;
a fourth sub-electrode layer disposed on the other side of the second piezoelectric material layer and connected to the second piezoelectric material layer;
wherein the third sub-electrode layer and the fourth sub-electrode layer are configured to jointly apply the driving signal to the second piezoelectric material layer.

14. A working mode switching method, applied to an electronic device comprising a display screen, a first acousto-electric conversion module, and a second acousto-electric conversion module, wherein the first acousto-electric conversion module and the second acousto-electric conversion module are located on one side of the display screen and connected to the display screen, or the first acousto-electric conversion module and the second acousto-electric conversion module are located inside the display screen; wherein the first acousto-electric conversion module is configured to implement conversion between ultrasonic or acoustic signals and electrical signals, and the second acousto-electric conversion module is also configured to implement conversion between ultrasonic or acoustic signals and electrical signals;
wherein the working mode switching method comprises:
determining a category of a trigger instruction when the electronic device receives the trigger instruction;
according to the category of the trigger instruction, controlling the first acousto-electric conversion module and the second acousto-electric conversion module in the electronic device to switch to a corresponding working mode.

15. The working mode switching method as claimed in claim 14, wherein the category of the trigger instruction comprises a fingerprint identification instruction, a sound signal output instruction, and a sound signal acquisition instruction;
according to the category of the trigger instruction, controlling the first acousto-electric conversion module and the second acousto-electric conversion module in the electronic device to switch to the corresponding working mode, comprises:
when the category of the trigger instruction comprises the fingerprint identification instruction, according to the fingerprint identification instruction, controlling at least one of the first acousto-electric conversion module and the second acousto-electric conversion module to implement the conversion between the ultrasonic signals and the electrical signals to implement fingerprint identification;
when the category of the trigger instruction comprises the sound signal output instruction, according to the sound signal output instruction, controlling at least one of the first acousto-electric conversion module and the second acousto-electric conversion module to convert the electrical signals into the acoustic signals to implement sound signal output;
when the category of the trigger instruction comprises the sound signal acquisition instruction, according to the sound signal acquisition instruction, controlling at least one of the first acousto-electric conversion module and the second acousto-electric conversion module to convert the acoustic signals into the electrical signals to implement sound signal acquisition.

16. The working mode switching method as claimed in claim 15, wherein when the category of the trigger instruction comprises the fingerprint identification instruction, according to the fingerprint identification instruction, controlling at least one of the first acousto-electric conversion module and the second acoustic conversion module to implement the conversion between the ultrasonic signals and the electrical signals to implement fingerprint identification, comprises:
when the category of the trigger instruction comprises the fingerprint identification instruction, determining a safety factor of fingerprint identification corresponding to the fingerprint identification instruction;
if the safety factor is greater than a safety factor threshold, controlling the first acousto-electric conversion module and the second acousto-electric conversion module to implement the conversion between the ultrasonic signals and the electrical signals according to the trigger instruction;
if the safety factor is not greater than the safety factor threshold, controlling the first acousto-electric conversion module or the second acousto-electric conversion module to implement the conversion between the ultrasonic signals and the electrical signals according to the trigger instruction.

17. A working mode switching apparatus, applied to an electronic device comprising a display screen, a first acousto-electric conversion module, and a second acousto-electric conversion module, wherein the first acousto-electric conversion module and the second acousto-electric conversion module are located on one side of the display screen and connected to the display screen, or the first acousto-electric conversion module and the second acousto-electric conversion module are located inside the display screen; wherein the first acousto-electric conversion module is configured to implement conversion between ultrasonic or acoustic signals and electrical signals, and the second acousto-electric conversion module is also configured to implement conversion between ultrasonic or acoustic signals and electrical signals;
wherein the working mode switching apparatus comprises:
a determination module configured to determine a category of a trigger instruction when the electronic device receives the trigger instruction;
a switching module configured to control the first acousto-electric conversion module and the second acousto-electric conversion module in the electronic device to switch to a corresponding working mode according to the category of the trigger instruction.

18. A storage medium wherein a computer program is stored in the storage medium, and when the computer program runs on a computer, the computer is configured to cause executions of:
determining a category of a trigger instruction when an electronic device receives the trigger instruction;
according to the category of the trigger instruction, controlling a first acousto-electric conversion module and a second acousto-electric conversion module in the electronic device to switch to a corresponding working mode.

19. An electronic device, comprising a processor and a memory, wherein a computer program is stored in the memory, and the processor is configured, by calling the computer program stored in the memory, for:
determining a category of a trigger instruction when the electronic device receives the trigger instruction;
according to the category of the trigger instruction, controlling a first acousto-electric conversion module and a second acousto-electric conversion module in the electronic device to switch to a corresponding working mode.

20. The electronic device as claimed in claim 19, wherein the category of the trigger instruction comprises a fingerprint identification instruction, a sound signal output instruction, and a sound signal acquisition instruction;
according to the category of the trigger instruction, when the first acousto-electric conversion module and the second acousto-electric conversion module in the electronic device are controlled to switch to the corresponding working mode, the processor is configured for:
when the category of the trigger instruction comprises the fingerprint identification instruction, according to the fingerprint identification instruction, controlling at least one of the first acousto-electric conversion module and the second acousto-electric conversion module to implement conversion between ultrasonic signals and electrical signals to implement fingerprint identification;
when the category of the trigger instruction comprises the sound signal output instruction, according to the sound signal output instruction, controlling at least one of the first acousto-electric conversion module and the second acousto-electric conversion module to convert electrical signals into acoustic signals to implement sound signal output;
when the category of the trigger instruction includes the sound signal acquisition instruction, according to the sound signal acquisition instruction, controlling at least one of the first acousto-electric conversion module and the second acousto-electric conversion module to convert acoustic signals into electrical signals to implement sound signal acquisition.
